Europäisches Patentamt

European Patent Office

Office européen des brevets

(19)

(11) Veröffentlichungsnummer: **0 219 863 B1**

# (12) EUROPÄISCHE PATENTSCHRIFT

(45) Veröffentlichungstag der Patentschrift: **08.01.92**

(51) Int. Cl.5: **H04L 27/38**

(21) Anmeldenummer: **86114682.7**

(22) Anmeldetag: **22.10.86**

(54) **Fangschaltung für die Trägerrückgewinnung aus einem QAM-Signal.**

(30) Priorität: **25.10.85 DE 3538032**

(43) Veröffentlichungstag der Anmeldung:
**29.04.87 Patentblatt 87/18**

(45) Bekanntmachung des Hinweises auf die
Patenterteilung:
**08.01.92 Patentblatt 92/02**

(84) Benannte Vertragsstaaten:
**AT CH DE GB IT LI NL**

(56) Entgegenhaltungen:
**EP-A- 0 098 705**

**PATENT ABSTRACTS OF JAPAN, Band 10,
Nr. 141 (E-406)[2198], 24. Mai 1986; & JP-A-61
3553**

(73) Patentinhaber: **SIEMENS AKTIENGESELL-
SCHAFT**
**Wittelsbacherplatz 2**
**W-8000 München 2(DE)**

(72) Erfinder: **Boshold, Klaus, Dipl.-Ing. (FH)**
**Sudetenstrasse 7**
**W-8912 Kaufering(DE)**

## Beschreibung

Die Erfindung bezieht sich auf eine Fangschaltung für die Trägerrückgewinnung aus einem QAM-Signal in der aus einem Demodulator und einer aus einem spannungsgesteuerten Oszillator (VCO) und einer Regelspannungserzeugung bestehenden Taktrückwinnungsschaltung aufgebauten Demodulationsschaltung eines Digital-Funksystems.

Der generelle Aufbau eines solchen Funksystems mit seinen sende- und empfangsseitigen Einrichtungen ist in dem Aufsatz "140-Mbit/s-Modem für Digital-Richtfunksysteme mit 16 QAM" von H. Barth und J. A. Nossek beschrieben, erschienen in telcom report 6 (1983) Heft 5, S. 271-276. Die dabei zur Demodulation erforderlichen Quadraturträger werden von einem 140 MHz-Oszillator und einer $90^\circ$-Verzweigung geliefert, wobei die Phase des Oszillatorsignals mit Hilfe einer getakteten Regelschleife nachgeführt wird.

In der Demodulationsschaltung für ein quadraturamplitudenmoduliertes Signal ist es notwendig, daß sich eine Synchronisierung der Phasenlage des Trägersignals mit der des QAM-Signals einstellt. Nach einer Unterbrechung des QAM-Signals kann jedoch eine Differenz (Frequenzablage) zwischen der Trägerfrequenz des Eingangssignals und der VCO-Frequenz vorhanden sein. Ursachen hierfür sind eine Toleranz der im Modulator erzeugten Trägerfrequenz, ein Umsetzfehler auf der Richtfunkverbindung, eine Toleranz des VCO oder ein Offset der Regelspannungserzeugung, wobei diese Fehler von üblichen Umgebungstemperatur- und Versorgungsspannungsschwankungen beeinflußt sein können.

Wegen dieser Frequenzablage und der im Vergleich zu dieser geringen Bandbreite der Regelschleife (zur Rückgewinnung eines ausreichend jitterfreien Trägersignals erforderlich) muß oft eine Fangschaltung, die ein Wobbeln des VCO bewirkt, vorgesehen werden.

Nach Wiederkehr des QAM-Signals kann es dabei vorkommen, daß bei bestimmten Frequenzablagen unzulässige Fangzustände auftreten.

Der Erfindung liegt die Aufgabe zugrunde, eine Fangschaltung zu schaffen, die solche unzulässigen Fangzustände verhindert bzw. beseitigt.

Diese Aufgabe wird gemäß der Erfindung in der Weise gelöst, daß an die Demodulationsschaltung eine Eingangspegelüberwachung und eine ausgangsseitig angeschlossene Überwachungsschaltung für die Bitfehlerrate angeschaltet sind, die an eine Logik geführt sind, über die beim Absinken des Eingangspegels unter eine Fehlerschwelle ein erster Schalter so gesteuert wird, daß die Regelspannungserzeugung eine zu Null symmetrische Wobbelspannung abgibt und über die die Bitfehler-Überwachungsschaltung das Durchschalten eines zweiten Schalters veranlaßt, so daß die Wobbelspannung eines Wobbeloszillators zum spannungsgesteuerten Oszillator gelangt, solange die Bitfehlerrate wegen nicht erfolgter Synchronisierung zu groß ist und über die der Wobbeloszillator abhängig vom Wert seiner Ausgangsspannung wiederum den ersten Schalter so steuert, daß die Regelspannungserzeugung eine zu Null symmetrische Wobbelspannung abgibt.

In vorteilhafter Weiterbildung der Erfindung ist vorgesehen, daß beim Absinken des Eingangspegels unter die Fehlerschwelle die VCO-Regelspannung auf Null gesteuert wird und ist ferner ein Zähler zur Ermittlung der Anzahl der Synchronisierversuche vorgesehen.

Nachstehend wird die Erfindung anhand eines in der Zeichnung dargestellten Ausführungsbeispiels näher erläutert.

Es zeigen

Figur 1     eine Fangschaltung im Blockschaltbild und

Figur 2     in einer graphischen Darstellung die Spannung am VCO-Eingang als Funktion der Zeit.

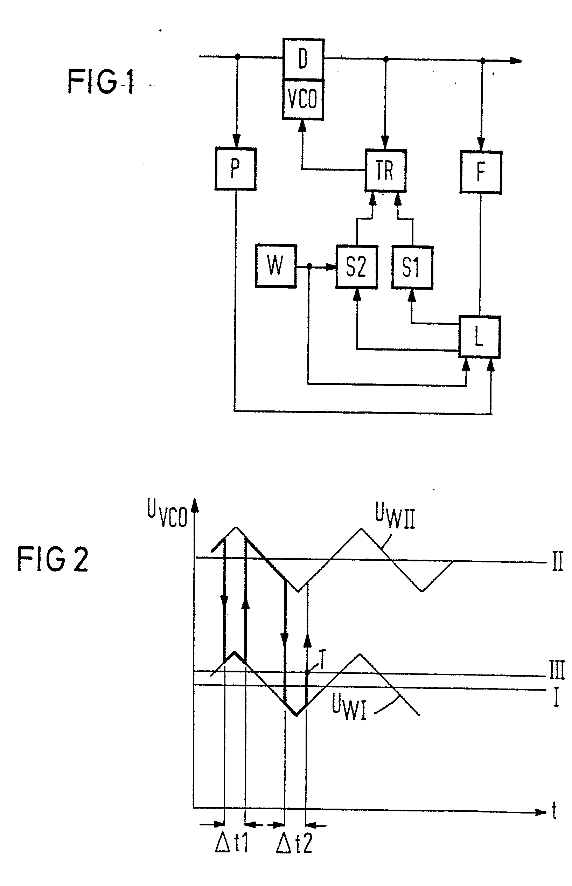

In der Figur 1 ist die Demodulationsschaltung dargestellt durch den im übertragungsweg angeordneten Demodulator D und die aus dem spannungsgesteuerten Oszillator VCO und der Regelspannungserzeugung TR bestehende Trägerrückgewinnungsschaltung. Vor dem Demodulator D ist eine Eingangspegelüberwachung P, ausgangsseitig eine Überwachungsschaltung F für die Bitfehlerrate (Überwachung der Augenöffnung, Codeverletzung oder ähnliches) angeschaltet. Eingangspegelüberwachung P und Bitfehler-Überwachungsschaltung F sind an eine Logik L angeschaltet, die über zwei elektronische Schalter S1, S2 mit der Regelspannungserzeugung TR verbunden ist. Ferner ist ein Wobbeloszillator W vorgesehen, der sowohl an die Logik L als auch an den einen elektronischen Schalter S2 angeschlossen ist.

Der nachstehenden Erläuterung der Wirkungsweise der Fangschaltung dient auch Figur 2, in der die Spannung am VCO-Eingang in Abhängigkeit von der Zeit dargestellt ist. Es ist dabei der Verlauf der Wobbelspannung eingezeichnet beim Vorhandensein von Offset (Frequenzablage) ($U_{WII}$ beim Wert II) und für den Fall, daß kein Offset vorhanden ist ($U_{WI}$ beim Wert I). III könnte der Wert der Regelspannung sein, bei der Synchronisierung erfolgen kann. Mit $\Delta t1$ und $\Delta t2$ sind Zeitbereiche bezeichnet, in denen die Regelschleife unterbrochen ist beim Offset Null. In diesen Zeitbereichen folgt die Spannung am VCO-Eingang jeweils dem Wobbelspannungsverlauf $U_{WI}$. Der Schnittpunkt des Spannungsverlaufs beim Übergang von $U_{WI}$ zu $U_{WII}$ mit dem Wert III bildet dabei den Synchronisierzeitpunkt T.

Die Fangschaltung arbeitet in der Weise, daß beim Absinken des Eingangspegels unter eine Fehlerschwelle die Logik L den Schalter S1 derart steuert, daß die Regelspannungserzeugung TR eine zu Null symmetrische Wobbelspannung oder wahlweise die Regelspannung Null abgibt, so daß bei Wiederkehr des Eingangspegels die Frequenzablage möglichst klein ist. Die Bitfehler-Überwachungsschaltung F veranlaßt über die Logik L das Durchschalten des Schalters S2, so daß die Wobbelspannung des Wobbeloszillators W bis zum VCO-Eingang gelangt, solange die Bitfehlerrate zu groß ist, d.h. keine Synchronisierung erfolgt ist. Falls ein falscher Fangzustand eintritt, bleibt die Überwachungsschaltung weiter in Alarmstellung und die Wobbelspannung bleibt durchgeschaltet. Zur Aufhebung des Falschfangzustandes wird bei jedem Minimum und Maximum der Wobbelspannung die Logik veranlaßt, den Schalter S1 so zu steuern, daß die Regelschleife unterbrochen und der Offset der VCO-Regelspannung beseitigt werden. Die Wobbelspannung bleibt jedoch wirksam. Der Vorgang wiederholt sich periodisch, bis richtig synchronisiert ist.

Bei der erfindungsgemäßen Schaltung bewirkt also die zum Erreichen der Synchronisierung des wiedergewonnenen Trägersignals mit dem QAM-Signal vorgesehene Wobbelspannug bei ihrem Maximal- und Minimalwert eine Offsetverschiebung des VCO's (für die Trägersignalerzeugung) und eine Unterbrechung der Regelschleife, solange sich der richtige Fangzustand nicht eingestellt hat. Außerdem wird bei fehlendem QAM-Signal die Frequenzablage des VCO's möglichst klein gehalten.

Die Schaltung kann auch mit einem Zähler für die Anzahl der Synchronisierversuche versehen werden. Dieser ermöglicht es, jeden neuen Synchronisierversuch mit einer veränderten Schaltungseinstellung, z.B. verändertem VCO-Offset zu beginnen.

## Patentansprüche

1. Fangschaltung, die unzulässige Fangzustände verhindert, für die Trägerrückgewinnung aus einem QAM-Signal in der aus einem Demodulator und einer aus einem spannungsgesteuerten Oszillator (VCO) und einer Regelspannungserzeugung bestehenden Taktrückgewinnungsschaltung (TR) aufgebauten Demodulationsschaltung eines Digital-Funksystems, **dadurch gekennzeichnet,** daß an die Demodulationsschaltung (D) eine Eingangspegelüberwachung (P) und eine ausgangsseitig angeschlossene Überwachungsschaltung für die Bitfehlerrate (F) angeschaltet sind, die an eine Logik (L) geführt sind, über die beim Absinken des Eingangspegels unter eine Fehlerschwelle ein erster Schalter (S1) so gesteuert wird, daß die Regelspannungserzeugung eine zu Null symmetrische Regelspannung abgibt und über die die Bitfehlerüberwachungsschaltung das Durchschalten eines zweiten Schalter (S2) veranlaßt, so daß die Wobbelspannung eines Wobbeloszillators (W) zum spannungsgesteuerten Oszillator gelangt, solange die Bitfehlerrate wegen nicht erfolgter Synchronisierung zu groß ist und über die der Wobbeloszillator abhängig vom Wert seiner Ausgangsspannung wiederum den ersten Schalter so steuert, daß die Regelspannungserzeugung eine zu Null symmetrische Wobbelspannung abgibt.

2. Fangschaltung nach Anspruch 1, **dadurch gekennzeichnet,** daß beim Absinken des Eingangspegels unter die Fehlerschwelle die VCO-Regelspannung auf Null gesteuert wird.

3. Fangschaltung nach Anspruch 1 und 2, **gekennzeichnet durch** einen Zähler zur Ermittlung der Anzahl der Synchronisierversuche.

## Claims

1. Lock-in circuit, which prevents inadmissible lock-in states, for carrier recovery from a QAM signal in the demodulation circuit of a digital radio system constructed from a demodulator and a timing recovery circuit (TR) consisting of a voltage-controlled oscillator (VCO) and a control voltage generating circuit, characterised in that, connected to the demodulation circuit (D) there are an input level monitor (P) and a monitoring circuit (F) for the bit error rate, connected on the output side thereof, which are connected to a logic circuit (L), by means of which a first switch (S1) is controlled such that the control voltage generating circuit supplies a control voltage that is balanced about zero when the input level falls below an error threshold, and by means of which the bit error monitoring circuit causes a second switch (S2) to be switched through such that the sweep voltage of a sweep oscillator (W) is passed to the voltage-controlled oscillator as long as the bit error rate is too great, as a result of synchronisation not having occurred, and by means of which the sweep oscillator in turn controls the first switch, depending on the value of its output voltage, such that the control voltage generating circuit supplies a sweep voltage that is balanced about zero.

2. Lock-in circuit according to Claim 1, characterised in that the VCO control voltage is controlled to zero when the input level falls below the error threshold.

3. Lock-in circuit according to Claims 1 and 2, characterised by a counter for determining the number of synchronisation attempts.

**Revendications**

1. Circuit d'accrochage empêchant des états inadmissibles d'accrochage, pour la récupération d'une porteuse à partir d'un signal QAM dans un circuit démodulateur d'un système de radiocommunications numériques, qui est constitué par un démodulateur et un circuit de récupération de la cadence (TR), formé par un oscillateur commandé par la tension (VCO) et une unité de production d'une tension de réglage,
caractérisé par le fait
qu'au circuit de démodulation (D) sont raccordés un circuit (P) de contrôle du niveau d'entrée et un circuit de contrôle raccordé sur le côté sortie et prévu pour des taux (F) d'erreurs sur des bits, qui sont envoyés à une unité logique (L), au moyen de laquelle, un premier interrupteur (S1) est commandé, lorsque le niveau d'entrée tombe au-dessous d'un seuil d'erreur, de telle sorte que l'unité de production de la tension de réglage délivre une tension de réglage symétrique par rapport au zéro, et au moyen de laquelle le circuit de contrôle d'erreurs sur les bits déclenche la fermeture d'un second interrupteur (S2) de sorte que la tension de vobulation d'un oscillateur de vobulation (W) est envoyée à l'oscillateur commandé par la tension tant que le taux d'erreurs sur les bits est trop élevé, en raison du fait que la synchronisation n'est pas réalisée, et au moyen de laquelle l'oscillateur de vobulation commande à nouveau, en fonction de la valeur de sa tension de sortie, le premier interrupteur de sorte que l'unité de production de la tension de réglage délivre une tension de vobulation symétrique par rapport au zéro.

2. Circuit d'accrochage suivant la revendication 1, caractérisé par le fait que, lorsque le niveau d'entrée tombe au-dessous du seuil d'erreur, la tension de régulation de l'oscillateur VCO est réglée à zéro.

3. Circuit d'accrochage suivant les revendications 1 et 2, caractérisé par un compteur servant à déterminer le nombre des essais de synchronisation.

FIG 1

FIG 2